Europäisches Patentamt

European Patent Office

Office européen des brevets

(19)

(11) Veröffentlichungsnummer: **0 010 611**
**A1**

(12) **EUROPÄISCHE PATENTANMELDUNG**

(21) Anmeldenummer: **79103625.4**

(22) Anmeldetag: **24.09.79**

(51) Int. Cl.³: **G 06 K 19/08,** G 07 C 9/00, G 09 F 3/02

(30) Priorität: **19.10.78 DE 2845567**

(43) Veröffentlichungstag der Anmeldung: **14.05.80**
**Patentblatt 80/10**

(84) Benannte Vertragsstaaten: **AT BE CH FR GB IT LU NL SE**

(71) Anmelder: **SIEMENS AKTIENGESELLSCHAFT Berlin und München, Postfach 22 02 61, D-8000 München 22 (DE)**

(72) Erfinder: **Rüll, Hartwig, Dipl.-Phys., 15-A Pine Cove, Mt. Laurel, N.J. 08054 (US)**

(54) **Personenkennkarte.**

(57) Die Erfindung bezieht sich auf eine Personenkennkarte, die zur automatischen Personenidentifizierung geeignet ist und die in hohem Maße fälschungssicher ist. Die Erfindung sieht dazu vor, daß mit der Kennkarte ein Hologramm untrennbar verbunden ist, in welchem charakteristische physiologische oder physiologisch bedingte Merkmale einer Person aufgezeichnet sind. Vorteilhafterweise sind eine Sprachprobe und/oder Körpermaße und/oder eine Probe der Schriftdynamik und/oder ein Fingerabdruck der Person im Hologramm abgespeichert.

Die Karte weist hohe Fälschungssicherheit auf, und es lassen sich mit ihr Personen mit hoher Zuverlässigkeit identifizieren.

EP 0 010 611 A1

SIEMENS AKTIENGESELLSCHAFT      Unser Zeichen
Berlin und München            VPA **78 P 7 1 7 3**

Personenkennkarte
_____

Die vorliegende Erfindung bezieht sich auf eine Personenkennkarte.

Personenkennkarten sind üblicherweise mit charakteristischen Daten über die Person versehen, die ihr erst nachträglich von anderen zugeordnet worden sind. Beispiele dafür sind ihr Name, ihr Geburtsdatum, ihr Wohnort, die Nummer ihres Personalausweises oder ihres Passes usf.. Damit festgestellt werden kann, ob der Kartenbesitzer tatsächlich die Person ist, der die Daten auf der Karte zugeordnet sind, wird auf der Karte zusätzlich noch ein fotografisches Bild der Person selbst aufgebracht.

Solche Personenkennkarten sind bislang in Form von Personalausweisen und Pässen jedermann geläufig.

Es hat sich jedoch leider herausgestellt, daß solche Personenkennkarten relativ mühelos gefälscht werden können. Es ist daher derzeit allgemeines Bestreben,
Ed 1 Sti/19.10.78 Personenkennkarten zu entwickeln, die möglichst fälschungssicher sind und mit denen möglichst zuverlässig
festgestellt werden kann, ob der Kartenbesitzer mit
der auf der Kennkarte gekennzeichneten Person identisch
ist oder nicht.

Eine fälschungssichere Personenkennkarte sollte nach
Möglichkeit folgenden Anforderungen genügen:
Sie soll schwer nachzubilden sein und eine Nachbildung
soll nach Möglichkeit als solche erkennbar sein. Veränderungen auf der Originalkarte sollen ebenfalls als
solche leicht erkennbar sein.

Weiter wird heute an Personenkennkarten die Forderung
gestellt, daß sie zur schnellen Personenidentifizierung
maschinell auswertbar sind. Eine solche maschinelle
Auswertung erfolgt dabei im allgemeinen so, daß maschinenlesbare Kenndaten auf der Kennkarte mit in einer
Zentralkartei abgespeicherten entsprechenden Kenndaten
der Person verglichen werden. Um bei einem solchen Verfahren aber nun auch feststellen zu können, ob der Kartenbesitzer mit der durch die Kenndaten identifizierten
Person identisch ist, muß immer noch das Lichtbild der
Kennkarte mit der Person des Kartenbesitzers verglichen
werden, was maschinell äußerst schwierig, kompliziert
und teuer durchzuführen sein dürfte.

Es ist mittlerweile eine Personenkennkarte bekannt geworden, bei welcher charakteristische Abmessungen einer
Hand der Person in einem auf der Kennkarte aufgebrachten Magnetstreifen gespeichert sind. Diese Kennkarte
ist Teil eines Identifizierungssystems, bei welchem
zur Identifizierung der Person eine Auswertevorrichtung
vorgesehen ist, mittels welcher die charakteristischen
Maße der betreffenden Hand des Kartenbesitzers genommen und entsprechend verkodet mit denen der Kennkarte auf Identität geprüft werden können.

Die auf einem Magnetstreifen gespeicherte Information kann nun aber leicht und mit relativ einfachen Mitteln verändert werden, so daß eine solche Kennkarte noch nicht ausreichend fälschungssicher ist.

Aufgabe der vorliegenden Erfindung ist es daher, eine Personenkennkarte anzugeben, welche zur automatischen Personenidentifizierung geeignet ist und welche in hohem Maße fälschungssicher ist.

Die Aufgabe wird dadurch gelöst, daß mit der Personenkennkarte ein Hologramm untrennbar verbunden ist, in welchem charakteristische, physiologische oder physiologisch bedingte Merkmale einer Person aufgezeichnet sind.

Diese Lösung bietet folgende Vorteile. Hologramme sind Festwertspeicher, d.h. holografisch gespeicherte Information kann im nachhinein nicht mehr verändert werden. Da das Hologramm mit der Kennkarte untrennbar verbunden ist, ist es äußerst schwierig, das Hologramm durch ein anderes zu ersetzen, ohne daß der Eingriff bemerkt wird.

Hologramme besitzen im Vergleich zu Magnetbändern eine ungleich höhere Speicherdichte, so daß bei der vorgeschlagenen Kennkarte ungleich mehr Daten auf der gleichen Fläche gespeichert werden können. Dadurch können auch komplexere Verfahren für die Personenerkennung verwendet werden, bei welchen die Fehlerdaten weit herabgedrückt sind.

Somit genügt eine vorgeschlagene Personenkennkarte in hohem Maße den Forderungen, die man an eine fälschungssichere Kennkarte stellt sowie den Forderungen nach
einer möglichst geringen Fehlerrate bei der Personenerkennung.

Besonders vorteilhafte Ausführungsformen der vorgeschlagenen Personenkennkarte sind so ausgebildet, daß
eine Sprachprobe und/oder Körpermaße und/oder eine
Probe der Schriftdynamik und/oder ein Fingerabdruck
der Person im Hologramm abgespeichert sind.

Bei einer Sprachprobe können dann die bekannten Verfahren zur Sprecherkennung für die Personenerkennung
herangezogen werden. Solche geeignete Verfahren und
Vorrichtungen dazu sind in Philips Technische Rundschau
37, Seiten 225 - 238, 1977/78, Nr. 8 angegeben.

Bevorzugterweise sind bei einer Personenkennkarte
mit aufgezeichneter Sprachprobe diese in Form von
Merkmalsvektoren abgespeichert. Der Begriff Merkmalsvektor wird in der angegebenen Literaturstelle auf Seite
228, Spalte 2, Absatz 2 erläutert.

Bei einer Kennkarte, bei welcher charakteristische
Körpermaße aufgezeichnet sind, sind vorzugsweise charakteristische Maße einer Hand oder des Kopfes der Person
aufgezeichnet. Die Personenerkennung kann hier wie bei
dem vorstehend angegebenen Personenidentifizierungssystem mit Magnetkarte erfolgen, wobei jetzt aber
erheblich mehr Meßwerte zur Charakterisierung der
Person aufgezeichnet werden können und die Personenerkennung durch verfeinerte Techniken, wie beispielsweise Laserstrahlabtastung,erheblich sicherer und
genauer durchgeführt werden kann.

Bei Personenerkennung durch die Schreibdynamik wird die Personenerkennung über die Schrifterkennung durchgeführt. Die Schrifterkennung erfolgt über die Schreibdynamik der Person. Dabei werden die Beschleunigungen ermittelt, denen der Schreibstift beim Schreiben einer Schriftprobe ausgesetzt ist. Unter Schreibdynamik soll hier die zu einer Schriftprobe gehörige vollständige Beschleunigungsinformation verstanden werden. Verfahren zur Schrifterkennung durch Schreibdynamik sowie eine Vorrichtung dazu geht aus IBM Technical Disclosure Bulletin, Vol. 19 Nr. 12, Mai 1977, Seiten 4827 - 4829 hervor. Auch hier ist die Personenerkennung um so sicherer, je mehr charakteristische Merkmale gespeichert sind und die vorgeschlagene Kennkarte ist hierzu hervorragend geeignet.

Wenn Fingerabdrücke aufgezeichnet sind, so kann die Personenerkennung bevorzugt mit Hilfe eines Vielkanalverfahrens zum Vergleich digital kodierter Muster, wie es beispielsweise in der DE-OS 24 24 189 beschrieben ist, verwendet werden. Auch hier läßt sich wie bei den anderen vorgeschlagenen Mitteln zur Personenerkennung diese schnell und zuverlässig durchführen.

Zur näheren Erläuterung der Erfindung werden im folgenden zwei vorteilhafte Verfahren zum Aufzeichnen von Sprachproben in ein Hologramm näher beschrieben.

Beim ersten Ausführungsbeispiel werden Sprachproben auf einem Magnetband aufgezeichnet und nach der oben angegebenen Literaturstelle "Philips Technische Rundschau" Merkmalsvektoren erzeugt. Diese Merkmalsvektoren werden in digital verkodeter Form in ein optisches Bitmuster umgesetzt, beispielsweise mit einem Seitensetzer, und dieses Bitmuster wird in konventioneller Weise in einem Hologramm aufgezeichnet. Der Hologrammträger kann ein herkömmlicher fotografischer Film sein. Das entwickelte Hologramm kann dann beispielsweise als Streifen mit dem Kennkartenträger verschweißt werden. Vorteilhaft ist es auch, wenn der Kennkartenträger selbst ein fotografischer Film ist. Es können dann das Hologramm sowie die anderweitigen Informationen fotografisch auf der gleichen lichtempfindlichen Schicht aufgezeichnet werden.

Bei dem zweiten vorteilhaften Verfahren zum Aufzeichnen der Sprachprobe wird . diese in elektrische Signale umgewandelt und diese Signale mit einem PCM-Kodierer verkodet. Diese verkodeten Signale werden auf einen elektrooptischen Modulator gegeben, der in einem Teilstrahl eines von einem Laser abgegebenen Laserstrahls angeordnet ist. Dieser Teilstrahl wird entsprechend den PCM-Signalen in der Intensität moduliert und dient als Objektstrahl. Ein anderer Teilstrahl des Laserstrahls bleibt unmoduliert und dient als Referenzstrahl für die Herstellung des Hologramms. Objekt- und Referenzstrahl werden auf der lichtempfindlichen Oberfläche des Hologrammträgers vereinigt und aufgezeichnet. Hier bildet der Hologrammbereich vorzugsweise einen schmalen Streifen von beispielsweise 1 mm Breite. Zur Rekonstruktion des Hologramms kann beispielsweise ein Halbleiterlaser verwendet werden, welcher den Streifen entlang in geringem Abstand davon geführt wird.

Es sei an dieser Stelle darauf hingewiesen, daß es prinzipiell beliebig ist, wie die ausgewählten physiologischen oder physiologisch bedingten Merkmale verkodet werden. Die Wahl des Kodes richtet sich im allgemeinen nach dem verwendeten Erkennungsverfahren. Wenn beispielsweise Erkennungsverfahren verwendet werden, die Computer einsetzen, wird bevorzugterweise binär verkodet. Bei anderen Verfahren kann auch eine analoge Verkodung günstig sein, beispielsweise bei Verwendung von Körpermaßen als physiologisches Merkmal.

Ein System zur Personenerkennung mit der vorgeschlagenen Kennkarte benötigt neben den verfahrensspezifischen Auswerteeinrichtungen, wie beispielsweise Computer, Vergleicher und dgl. lediglich noch eine Vorrichtung, welche von der zu prüfenden Person eine Vergleichsprobe neben kann und diese mit dem gleichen Kode, wie er für das Hologramm bemutzt worden ist, verkodet. Dieses Gerät kann demnach dasselbe sein, welches das Kodemuster erzeugt, das im Hologramm aufgezeichnet wird.

4 Patentansprüche

Patentansprüche

1. Personenkennkarte, d a d u r c h   g e k e n n -
z e i c h n e t ,   daß mit ihr ein Hologramm untrennbar
verbunden ist, in welchem charakteristische physiologische oder physiologisch bedingte Merkmale einer Person.
aufgezeichnet sind.

2. Kennkarte nach Anspruch 1, d a d u r c h   g e -
k e n n z e i c h n e t ,   daß eine Sprachprobe und/oder
Körpermaße und/oder eine Probe der Schriftdynamik und/
oder ein Fingerabdruck der Person im Hologramm abgespeichert sind.

3. Kennkarte nach Anspruch 2, d a d u r c h   g e -
k e n n z e i c h n e t ,   daß eine Sprachprobe in
Form von Merkmalsvektoren im Hologramm aufgezeichnet
ist.

4. Kennkarte nach Anspruch 2 oder 3, d a d u r c h
g e k e n n z e i c h n e t ,   daß charakteristische
Maße einer Hand oder des Kopfes der Person im Hologramm
abgespeichert sind.

Europäisches Patentamt

# EUROPÄISCHER RECHERCHENBERICHT

0010611

Nummer der Anmeldung

EP 79 103 625.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
|  | DE - B2 - 2 144 779 (OPTRONICS INTER-NATIONAL)<br>* Spalte 3 *<br><br>-- | 1 |
| A | DE - B - 1 939 594 (RCA CORP.)<br>* vollständiges Dokument *<br><br>-- | 1 |
| A | DE - A1 - 2 647 061 (BOCHUMER EISEN-HÜTTE)<br>* vollständiges Dokument *<br><br>-- | 2,4 |
| A | DE - A1 - 2 708 569 (NCR CORP.)<br>* vollständiges Dokument *<br><br>---- | 2,3 |

### KLASSIFIKATION DER ANMELDUNG (Int.Cl.3)

G 06 K 19/08

G 07 C 9/00

G 09 F 3/02

### RECHERCHIERTE SACHGEBIETE (Int. Cl.3)

G 06 K 19/08

G 07 C 9/00

G 07 C 11/00

G 09 F 3/02

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-02-1980 | ZOPF |

EPA form 1503.1 06.78